# EUROPÄISCHE PATENTSCHRIFT

(11) **EP 0 805 720 B1**
(45) Veröffentlichungstag und Bekanntmachung des Hinweises auf die Patenterteilung: **10.10.2001**
(21) Anmeldenummer: 95940252.0
(22) Anmeldetag: 28.11.1995
(51) Int. Cl.: B05B 13/06

(54) **VORRICHTUNG ZUR INNENBESCHICHTUNG VON ROHREN**
DEVICE FOR INTERNAL COATING OF PIPES
DISPOSITIF POUR REVETIR L'INTERIEUR DE TUYAUX

(43) Veröffentlichungstag der Anmeldung: 12.11.1997
(73) Patentinhaber: DIPL.-ING. ERNST KREISELMAIER WASSER- UND METALL- CHEMIE KG, 46244 Bottrop (DE)
(72) Erfinder: KREISELMAIER, Richard, D-46244 Bottrop (DE)
(74) Vertreter: Thiel, Christian, Dr. Dipl.-Chem.
(86) Internationale Anmeldenummer: EP9504674
(87) Internationale Veröffentlichungsnummer: WO9719758

(56) Entgegenhaltungen:
- DE-A- 4 211 146
- US-A- 5 235 718
- US-A- 5 307 866

## Beschreibung

Die Erfindung betrifft eine Vorrichtung zur Innenbeschichtung von Rohren, insbesondere von Kühlmittelrohren von Dampfkondensatoren und Wärmetauschern mit Kunststoffabmischungen.

Es ist bekannt, Dampfkondensatoren, wie sie beispielsweise in Anlagen zur Erzeugung elektrischer Energie eingesetzt werden, mit einer Kunststoffbeschichtung zu versehen, um Korrosionserscheinungen, insbesondere auch Erosionen, entgegenzuwirken. Rohrböden und die davon ausgehenden Kühlmittelrohre sind einer Vielzahl von äußeren Einflüssen ausgesetzt, insbesondere mechanischen, chemischen und elektromechanischen Beanspruchungen.

Mechanische Beanspruchungen treten auf durch vom Kühlmittel mitgerissene feste Partikel, beispielsweise Sand. Außerdem treten durch die Temperaturdifferenz zwischen dem Kühlmedium und dem zu kondensierenden Dampf, die 100°C übersteigen kann, Ausdehnungen auf, die insbesondere im Einwalzbereich der Kühlmittelrohre zu mechanischer Beanspruchung führen.

Chemische Beanspruchungen ergeben sich aus der Natur des Kühlmediums, beispielsweise aus dessen Befrachtung mit Salzen, basischen oder sauren Substanzen. Insbesondere wäre hier die bekannte Korrosionswirkung von zu Kühlzwecken verwandtem Meerwasser oder stark belastetem Flußwasser zu nennen.

Unter elektrochemischer oder galvanischer Korrosion ist diejenige zu nennen, die durch die Ausbildung von galvanischen Elementen an metallischen Grenzflächen, insbesondere an den Übergängen von Rohrboden zu Kühlmittelrohr, auftreten und die durch elektrisch leitende Flüssigkeiten, etwa Meerwasser, stark gefördert werden.

Hinzu kommen Beeinträchtigungen der Funktionsfähigkeiten von Dampfkondensatoren durch Ablagerung unerwünschter Stoffe, Algenbildung, etc., die insbesondere durch Rauhigkeiten gefördert wird, wie sie durch Korrosionserscheinungen entstehen. Dies hat zur Folge, daß sich die Korrosions- und Ablagerungserscheinungen mit der Betriebsdauer eines Dampfkondensators beschleunigen, weil sich zunehmend Ansatzpunkte für Korrosion und Ablagerungen bilden.

Schon frühzeitig ist man deshalb dazu übergegangen, Dampfkondensatoren mit einer korrosionsmindernden Beschichtung aus Kunststoffmaterialien zu versehen. Insbesondere werden hier Epoxidharz-Dickbeschichtungen eingesetzt.

Zunächst wurden überwiegend nur die Rohrböden selbst beschichtet, was aber nicht die speziell mit der Ausbildung von Korrosionserscheinungen und Ablagerungen in den Rohren verbundenen Probleme löst. Später wurden dann auch die Rohrein- und Auslässe in die Beschichtung einbezogen, um den besonders gefährdeten Übergangsbereich zu schützen. Maßnahmen der vorstehend genannten Art sind beispielsweise aus, DE-U-1 939 665, DE-U-7 702 562, EP-A-0 236 388 sowie EP-A-94 106 304 bekannt.
US-A-5 307 866 beschreibt ein Rohrreinigungsgerät, mit dem ein Reinigungskopf in ein Rohr ein- und ausgefahren werden kann. Ein Gerät zur Innenreinigung von Rohren mit einem Hochdruckschlauch, daran angeordneter Lanze und Spritzdüsen für Hochdruckwasser geht aus DE-A-4 211 146 hervor.

Es hat sich aber gezeigt, daß nur eine vollständige Beschichtung auch der Kühlmittelrohre einen langandauernden Korrosionsschutz und eine lange Betriebsdauer sicherstellen kann. Die Innenbeschichtung von solchen Kühlmittelrohren stellt aber wegen ihrer teilweise erheblichen Länge und wegen des geringen Durchmessers ein großes Problem dar, insbesondere wenn man berücksichtigt, daß die Beschichtung möglichst gleichförmig, ausfallen muß, um geringe Ansatzpunkte für Ablagerungen und Korrosionerscheinungen zu schaffen. Zugleich muß die Beschichtung vor Ort und in möglichst kurzem Zeitraum erstellt werden können, um einen Anlagenstillstand möglichst kurz zu gestalten. Angesichts der großen Zahl von Kühlmittelrohren in Dampfkondensatoren, die mehrere tausend Rohre umfassen, bedeutet dies, daß das Beschichtungsverfahren weitgehend automatisiert und standardisiert werden muß.

In Anbetracht der vorstehend aufgezeigten Probleme liegt der Erfindung die Aufgabe zu grunde, eine Vorrichtung bereitzustellen, mit der Kühlmittelrohre möglichst schnell mit einer möglichst gleichmäßigen Beschichtung versehen werden können.

Diese Aufgabe wird mit einer Vorrichtung zur Innenbeschichtung von Rohren, insbesondere von Kühlmittelrohren von Dampfkondensatoren mit Kunststoffabmischungen, mit einer Versorgungseinheit zur Heranführung und Weiterleitung von Beschichtungsmaterial, einer Applikationseinheit zur Aufbringung des von der Versorgungseinheit herangeführten Beschichtungsmaterials sowie einer Steuereinheit zur Überwachung und Steuerung der Versorgung mit Beschichtungsmaterial und der Ausbringung des Beschichtungsmaterials auf Rohrinnenwandungen gelöst, bei der die Applikationseinheit einen Führungsschlauch mit einem auf das zu beschichtende Rohr aufsetzbaren Mundstück und einen in dem Führungsschlauch geführten und durch das Mundstück in das zu beschichtende Rohr einführbaren Applikationsschlauch mit einer Applikationsdüse aufweist.

Die erfindungsgemäße Vorrichtung ist besonders für eine schnelle, gleichmäßige und weitgehend standardisierte Innenbeschichtung von Kühlmittelrohren ausgelegt. Erfindungsgemäß ist es möglich, die entsprechend gereinigten und vorbereiteten Rohre aufeinanderfolgend mit einer Kunststoffbeschichtung zu versehen, wobei bei Rohrlängen von mehreren Metern Beschichtungszeiten pro Rohr von maximal einigen Minuten möglich sind. Es ist auch ohne weiters möglich, Rohre nur teilweise, beispielsweise in den Endbereichen zu beschichten oder auch mehrere Schichten unterschiedlichen Materials, beispielsweise in Form einer Grundierung, einer Hauptschicht und einer Deckschicht, aufzubringen.

Zweckmäßigerweise ist der Applikationsschlauch durch den Führungsschlauch über seine gesamte Länge und damit auch die gesamte Länge des zu beschichtenden Rohrs mit vorgegebener Geschwindigkeit aus- und rückfahrbar. Für Hochdruckapplikationen sollte der Schlauch über die notwendige Druckfestigkeit verfügen; ohnehin ist eine hinreichende Steifigkeit erforderlich, um die Ausfahrbarkeit in das zu beschichtende Rohr zu gewährleisten, die bei druckfesten Schläuchen in der Regel gegeben ist.

Zweckmäßigerweise ist die erfindungsgemäße Vorrichtung für Airless-Spritzverfahren ausgelegt und entsprechend auch der Applikationsschlauch und die Spritzdüse. Dabei sollte die Spritzdüse so ausgestaltet sein, daß die Applikation des Beschichtungsmittels im Rückfahrbetrieb erfolgt, um eine fehlerlose Beschichtung zu gewährleisten, die nicht durch Zug- oder Schleifspuren beeinträchtigt ist. Zur Wahrung eines gleichmäßigen Abstands zur Wandung können im Bereich der Spritzdüse Abstandshalter vorgesehen sein. Zur Beschichtung erzeugt die Düse zweckmäßigerweise einen Hohlkegel aus Spritzgut, der in einem geeigneten Winkel gegen die Wandung gerichtet ist.

Um die Handhabung der erfindungsgemäßen Vorrichtung und insbesondere des Applikationsschlauches zu erleichtern, befindet sich am Ende des Führungsschlauchs vorzugsweise eine Handpistole, die mit dem Führungsschlauch über ein Drehgelenk verbunden ist und auf das Mundstück aufgesetzt ist. Mit der Handpistole kann das Mundstück gegen das Rohrende gepresst werden, so daß der mittig durch das Mundstück geführte Applikationsschlauch unmittelbar in das Rohr eintreten kann. Zur Anpassung an die Rohröffnung ist das Mundstück zweckmäßigerweise gerundet oder oval gestaltet, was zum einen die Zentrierung erleichtert und zum anderen die Anpassung an Rohre unterschiedlicher Weite. Das mit der Handpistole verbundene Mundstück dient gleichzeitig als Distanzhalter und Fixpunkt für den Applikationsschlauch, der über die jeweils vorgegebene Länge in das Rohr eingefahren wird.

Vorzugsweise befindet sich im Applikationsschlauch, insbesondere unmittelbar in der Nähe der Spritzdüse, ein Feinfilter, um ein Verstopfen der Düse durch Partikel zu vermeiden, sowie ein Rückschlagventil, das den Materialfluß ohne große Verzögerung unterbricht, um ein Nachfließen von Beschichtungsmaterial nach Beendigung der Aufbringung zu vermeiden.

Die Handpistole weist zweckmäßigerweise eine Funktionssteuerung auf, mit der zumindest die Betriebsbefehle gegeben werden können, d. h. zumindest Beginn des Aus- und Rückfahrvorgangs für den Applikationsschlauch sowie zumindest Beginn des Applikationsvorgangs. Es ist aber zugleich zweckmäßig, die Funktionshandsteuerung mit einer Umschaltung von Automatik- auf Handbetrieb zu versehen, um für besondere Fälle den gesamten Beschichtungsvorgang manuell steuern zu können.

Die erfindungsgemäße Vorrichtung ist für eine Beschichtung unter hohem Druck ausgelegt, beispielsweise für ein Betriebsdruck von 5 bis 500 bar und insbesondere einen solchen von 10 bis 250 bar. Dies bedeutet, daß alle Funktionen und Leitungen von der Ansaugpumpe bis zur Spritzdüse auf einen derartigen Druck ausgelegt sein müssen; die hierfür benötigten Komponenten sind bekannt und kommerziell erhältlich.

Im Bereich der Versorgungseinrichtung befindet sich in einem Ansaugstutzen oder -schlauch zweckmäßigerweise ein Grobfilter, mit dem das aus einem Vorratsbehälter angesaugte Beschichtungsmaterial frei von groben Partikeln angefördert wird. Die Förderpumpe ist zweckmäßigerweise eine gegendruckabhängige Kolbenpumpe, die eine Materialförderung sicher stellt, solange Spritzmaterial abgegeben wird. Mit der Kolbenpumpe wird gleichzeitig der für den Betrieb der Vorrichtung nötige Applikationsdruck aufgebaut.

Im weiteren Verlauf des Materialtransports von der Förderpumpe zur Spritzdüse befindet sich zweckmäßigerweise ein Rückschlagventil zusammen mit einer Doppelschaltfiltereinrichtung zur weiteren Filterung des Beschichtungsmaterials. Hierbei sind zwei Filtereinrichtungen parallel geschaltet und mit einer Druckdifferenzüberwachung versehen, die als Verschmutzungsanzeige dienen kann. Die Druckdifferenzüberwachung erfolgt über die Steuereinheit, die zweckmäßigerweise auch die Werte anzeigt und anhand einer Meßzelle den Materialfluß überwacht und die Schaltung der Filter regelt. Der Materialfluß kann somit über lange Zeit gewährleistet werden und ein Zusetzen der Filter so frühzeitig entdeckt und angezeigt werden, daß ein Beschichtungsvorgang geordnet zu Ende gebracht werden kann und nicht vorzeitig abgebrochen werden muß.

Es versteht sich, daß die einzelnen Komponenten der erfindungsgemäßen Vorrichtung durch Hähne, zweckmäßigerweise Kugelhähne, nach allen Seiten gesichert sind, so daß kurzfristig ein Austausch der Komponenten vorgenommen werden kann.

Von der Versorgungseinheit mit den Filtereinheiten und der Meßzelle führt die Materialversorgung über einen druckfesten Schlauch direkt zur Applikationseinheit, in der sich der Applikationsschlauch zweckmäßigerweise auf eine Trommel aufgewickelt befindet. Die Trommel ist über einen Elektromotor betreibbar, der wiederum von der Steuereinheit über Befehle betätigt wird. Je nach Betriebszustand wird der Applikationsschlauch von der Trommel ab- bzw. auf die Trommel aufgewickelt, wobei er unmittelbar an der Trommel in einen Führungsschlauch eintritt.

Als dritte Einheit verfügt die erfindungsgemäße Vorrichtung über eine Steuereinheit, mit der insbesondere die Ansaug/Abgabemenge und der Druck überwacht, gesteuert und angezeigt werden. Die Steuereinheit sorgt für die Funktionsfähigkeit der Anlage und einen reibungsfreien Betrieb. Sie ist zweckmäßigerweise hinsichtlich Vorschublänge, Vorschubgeschwindigkeit und Rückfahrgeschwindigkeit des Applikationsschlauches programmierbar, des weiteren hinsichtlich Spritzgeschwindigkeit und Abgabemenge, wobei, wie bereits angeführt, das Programm vom Bediener außer Funktion gesetzt und die Anlage auf Handbetrieb umgeschaltet werden kann. Bei Umschaltung auf Handbetrieb bleiben die zentralen Überwachungseinheiten in Betrieb, d. h. die Überwachung und Steuerung des Ansaug/Abgabevorgangs sowie des Betriebsdrucks.

Insbesondere die Möglichkeit, die Vorschublänge des Applikationsschlauches und seine Rückfahrgeschwindigkeit in Kombination mit der Materialabgabe zu programmieren ermöglicht es, große Zahlen an Kühlmittelrohren auf standardisierte Art und Weise schnell und zuverlässig zu beschichten.

Die erfindungsgemäße Vorrichtung ist vorzugsweise fahrbar ausgelegt, so daß sie am Einsatzort einfach bewegt und in Position gebracht werden kann. Dabei ist es zweckmäßig, die Steuer- und die Versorgungseinheit zu einer Fahreinheit zusammenzufassen, die über einen druckfesten Versorgungsschlauch mit der Applikationseinheit und ggfs. eine Kabelverbindung mit der Handsteuerung in Verbindung steht. Der Versorgungsschlauch zwischen Steuer/Versorgungseinheit und Applikationseinheit kann dabei eine beliebige Länge aufweisen. Dies ermöglicht es, die relativ empfindliche Steuer/Versorgungseinheit weiter entfernt von der Applikationseinheit zu betreiben, was aus Platzgründen, aber auch zur Schonung der empfindlicheren Anlagenteile zweckmäßig sein kann.

Die Erfindung wird durch die beiliegenden Abbildungen näher erläutert. Von diesen zeigt
Fig. 1 den Fluidwirkschaltplan der Versorgungseinheit;
Fig. 2 die Applikationseinheit und
Fig. 3 eine Handpistole für die Applikationseinheit.

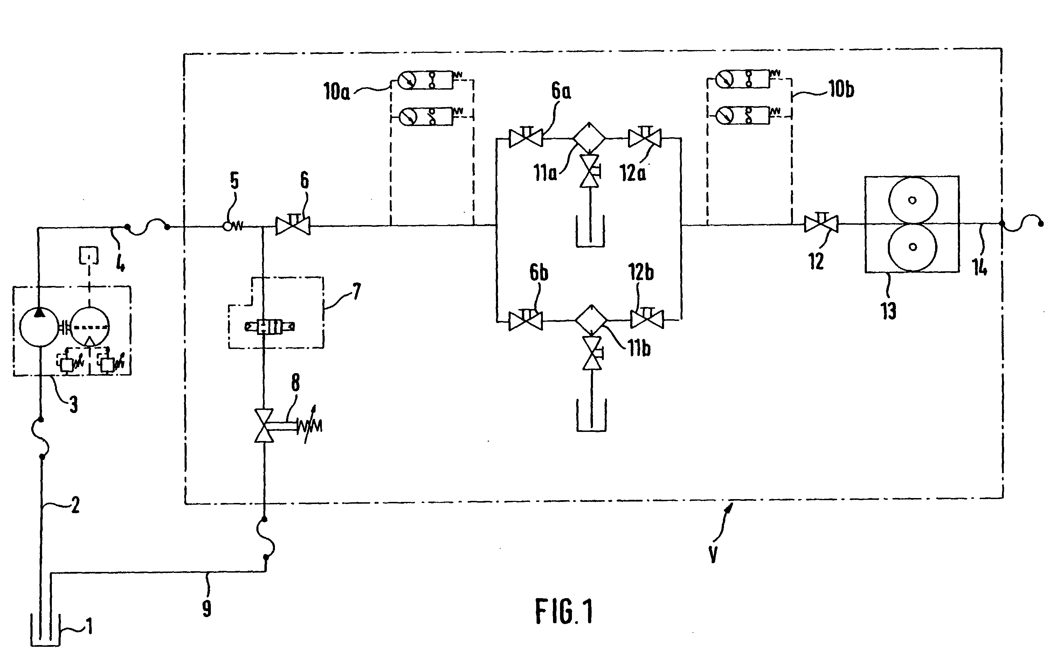

Gemäß Fig. 1 besteht die Versorgungseinheit V aus einem Ansaugschlauch 2, der das zu fördernde Beschichtungsmaterial aus einem Vorlagegefäß 1 mittels Pumpe 3 ansaugt. Der Schlauch 2 muß nicht druckbeständig sein und hat beispielsweise einen Durchmesser von 19 mm.

Bei der Pumpe 3 handelt es sich zweckmäßigerweise um eine druckluftgetriebene doppeltwirkende Kolbenpumpe, mit der sowohl Material angesaugt als auch unter Druck abgegeben werden kann. Die Pumpe arbeitet gegendruckabhängig selbstätig, d. h. die Materialförderung erfolgt nur, wenn Spritzmaterial abgegeben oder entnommen wird, z. B. durch Auslösen des Beschichtungsvorgangs. Eine Förderleistung von beispielsweise 27 l/min bei 0 bar ist ausreichend, ein Druck von bis zu 500 bar ohne weiteres erzielbar.

Von der Kolbenpumpe wird das geförderte Material über eine druckfeste Leitung 4 mit beispielsweise einem Durchmesser von 10 mm über ein Rückschlagventil 5 und einen Kugelhahn 6 einer Doppelfiltereinheit 11a/11b zugeführt. Zwischen dem Rückschlagventil 5 und dem Kugelhahn 6 befindet sich eine Rückleitung 9, die über einen pneumatischen Kugelhahn 7 und eine Rückdruckregelgruppe 8 mit einem Druckregler in die Materialvorlage zurückführt.

Die Doppelfiltereinheit 11a/11b ist von zwei Drucksensoren 10a/10b eingerahmt, die eine Druckdifferenzüberwachung über die zentrale Steuereinheit ermöglichen. Die Druckdifferenzüberwachung ist regulär als Verschmutzungsanzeige der Filter gedacht, so daß bei Zusetzen eines Filters rechtzeitig auf den anderen umgeschaltet werde kann und auch frühzeitig Maßnahmen zu einer geordneten Beendigung eines Beschichtungsvorgangs getroffen werden können. Ein problemloser Austausch der Filtereinheiten ist durch Betätigung der Kugelhähne 6a/12a und 6b/12b möglich. Eine handelsübliche Meßzelle 13, beispielsweise eine Zahnradmeßzelle oder eine Ultraschallmeßzelle, erlaubt die zuverlässige Messung, Überwachung und Darstellung des Materialflusses in der zentralen Steuereinheit, die durch Auswertung der Differenzdruckmessung, der Meßwerte der Meßzelle und der Förderleistung der Pumpe 3 die zur Steuerung des Beschichtungsvorgangs nötigen Daten erhält.

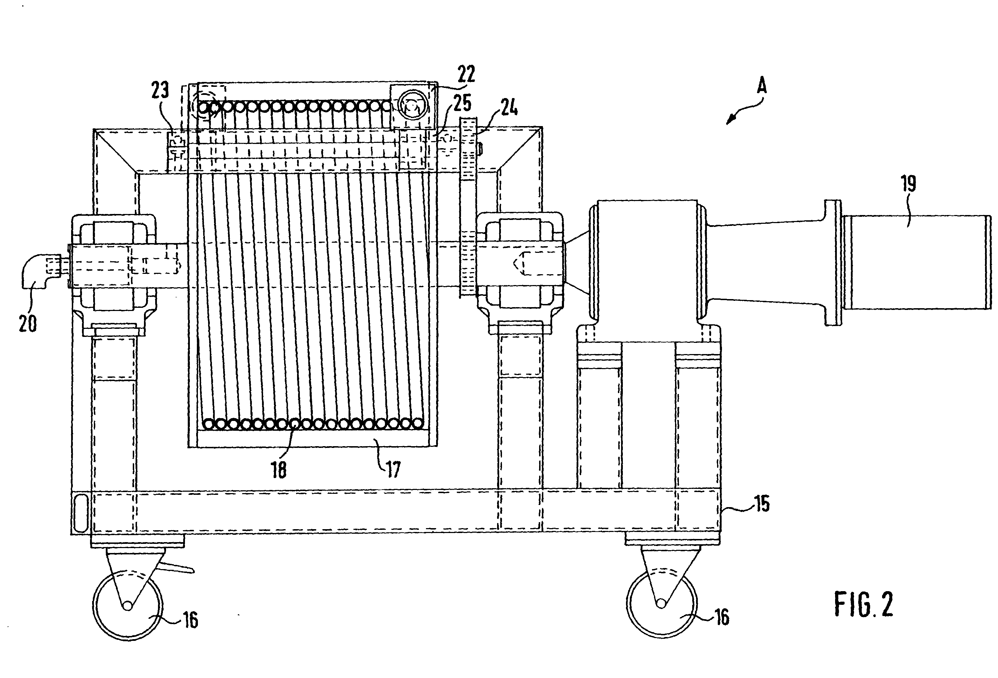

Von der Meßzelle 13 gelangt das geförderte Material über die Leitung 14 zur Applikationseinheit A gemäß Fig. 2.

Die Applikationseinheit A ist auf einem mit Rollen 16 versehenen Untersatz 15 angeordnet. Eine auf dem Untersatz 15 gelagerte Trommel 17 nimmt den Applikationsschlauch 18 auf, der mit Hilfe des Motors 19 auf- und abgewickelt werden kann. Die Materialversorgung erfolgt über den Zuführstutzen 20, an den der Schlauch 14 der Versorgungseinrichtung angeschlossen ist. Von dem Anschlußstutzen 20 gelangt das Material über eine Drehdurchführung in den Applikationsschlauch 18 und von dort weiter zur Applikationsdüse.

Der Applikationsschlauch 18 wird von der Trommel durch einen Führungsschlauch 21 (nicht dargestellt) geführt. Der Führungsschlauch befindet sich an einem Ansatz 22 im oberen Bereich der Trommel 17, der mittels Schlitten an einer feststehenden Führungseinrichtung 23 geführt wird, so daß er beim Auf- und Abwickeln des Applikationsschlauches 18 den Wicklungen des Applikationsschlauches in horizontaler Richtung folgen kann. Ein Antrieb 24, der mit dem Motor 19 gekoppelt ist, bewegt den Führungsschlitten 25 mit dem Führungsschlauchansatz 22 synchron zum Ab- bzw. Aufwicklungsvorgang. Der Ab-bzw. Aufwicklungsvorgang kann durch Endschalter, die sich an den Enden der Führungseinrichtung 23 befinden, beendet werden.

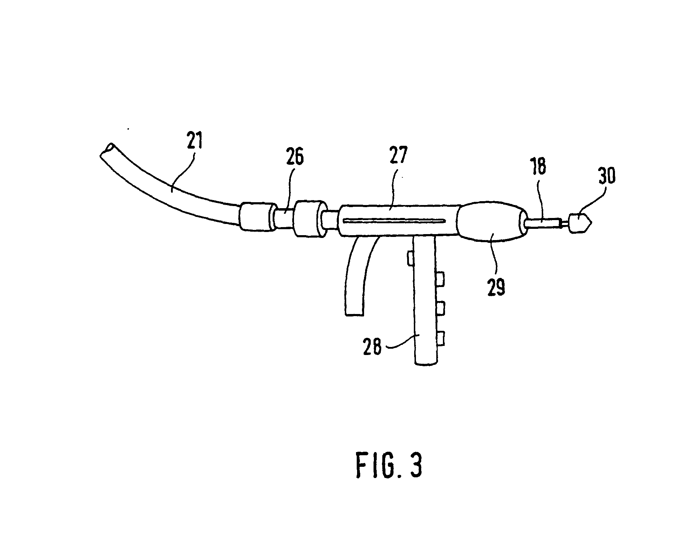

Fig. 3 zeigt die eigentliche Applikationsvorrichtung mit dem Führungsschlauch 21, der über ein Drehgelenk 26 an die Handpistole 27 angeschlossen ist. Die Handpistole 27 verfügt über eine Funktionshandsteuerung, die an einem separaten Griff 28 angeordnet ist und über die Funktionen Automatiksteuerung, Schlauch manuell vor, Schlauch manuell zurück und Spritzen manuell ein verfügt. Am vorderen Ende der Handpistole befindet sich das ovale Mundstück 29, die auf das Rohrende aufgesetzt wird. Aus einer zentralen Öffnung ragt das Ende des Applikationsschlauchs 18 hervor, der selbst in der Spritzdüse 30 endet.

Über die genannten Funktionen hinaus kann die Funktionshandsteuerung an der Handpistole auch weitere Steuerungselemente enthalten, mit der Einfluß auf die zentrale Steuerung genommen werden kann.

Die erfindungsgemäße Vorrichtung hat sich als besonders geeignet zum Beschichten von längeren Rohren mit kleinem Durchmesser erwiesen. Dabei hat es sich als zweckmäßig erwiesen, den Applikationsschlauch mit einer Geschwindigkeit von 0,5 bis 5 m/s zu verfahren. Längen des Applikationsschlauches von 20 oder 30 m sind ohne weiteres möglich.

Die Vorrichtung wird zweckmäßigerweise mit einem Druck im Bereich von 15 bis 250 betrieben.

Für den Fall, daß Versorgungs- und Applikationseinrichtung voneinander getrennt sind, sollte die Entfernung nicht mehr als 10 m betragen. Der Führungsschlauch selbst kann eine Länge von bis zu 10 m haben, wobei zu berücksichtigen ist, das die Führungsschlauchlänge von der Arbeitslänge des Applikationsschlauches abgeht. Abgesehen von einer gewissen Glätte im Innenbereich werden an das Material des Führungsschlauches keine besonderen Anforderungen gestellt.

Die zentrale Steuereinheit überwacht den Druck und den gesamten Materialfluß der Anlage und nimmt, soweit erforderlich auf die Ansaug- und Abgabemengen an Beschichtungsmittel Einfluß. Des weiteren ist es bevorzugt, über die zentrale Steuereinrichtung das Verfahren des Applikationsschlauches zu regeln, beispielsweise hinsichtlich Ausfahrlänge, Ausfahrgeschwindigkeit, Rückfahrgeschwindigkeit sowie Freigabe des Beschichtungsmaterials zur Applikation nach Erreichen des Endpunkts nach Ausfahren des Applikationsschlauches.

Insbesondere dient die zentrale Steuereinheit dazu, einen kostanten Materialfluß mit konstantem Druck über die erforderliche Zeit zu gewährleisten, d. h. auch, so rechtzeitig auf mögliche Störung hinzuweisen, daß der Applikationsvorgang noch zuverlässig abgeschlossen werden kann. Auf die Differenzdrucküberwachung wurde bereits hingewiesen, ebenso auf die Durchflußüberwachung. Im übrigen kann Beginn und Ende der Applikation des Beschichtungsmittels sowohl von der zentralen Steuereinheit anhand eines vorgegebenen Programms als auch durch den Bediener der Handpistole bestimmt werden, wie auch der Abbruch des Applikationsvorganges.

Im Betrieb wird die vor Ort befindliche Einrichtung vom Bediener über die Handpistole mittels Mundstück auf das gereinigte und vorbehandelte Rohr gesetzt wonach über Tastendruck das Ausfahren des Applikationsschlauches mit der Düse in das Rohr veranlaßt wird. Die Länge des Rohrs und damit die Ausfahrlänge ist vorprogrammiert, so daß die zentrale Steuereinheit die Vorfahrbewegung automatisch stoppt. Nach Erreichen des Endpunkts wird entweder von der zentralen Steuereinheit oder aber vom Bediener der Beschichtungsvorgang zusammen mit der Rückfahrt des Applikationsschlauches ausgelöst, so daß der Schlauch sich unter Fördern einer vorgegebenen Menge an Beschichtungsmittel mit vorgegebener Geschwindigkeit zurück zur Einfahröffnung des Rohres bewegt. Nach Erreichen des Mundstücks wird der Beschichtungsvorgang automatisch oder manuell vom Bediener abgebrochen.

Die Beschichtung kann in mehreren Schichten aufgetragen, wobei jede Schicht auf die noch reaktive Oberfläche der darunter liegenden Schicht aufgebracht wird, um eine chemische Vernetzung zu erzielen. Die erfindungsgemäße Vorrichtung ist für Mehrfachbeschichtungen in aufeinanderfolgenden Arbeitgängen geeignet, wobei die Topfzeit des zur Verwendung kommenden Harzes ebenso wie die Aushärtzeit bis zur Klebfreiheit zu berücksichtigen sind.

Es hat sich manchmal als zweckmäßig erwiesen, die gereinigten Flächen vor der Aufbringung der Beschichtung mit einer Grundierung zu versehen, die in der Regel niedriger viskos aufgespritzt wird und in Korrosionsmulden und -narben eindringt. Hierdurch wird eine Einebnung der Flächen, eine bessere Anpassung an Unebenheiten und eine insgesamt bessere Haftung der Schichten erreicht. Auch für die Grundierungsschicht kann die erfindungsgemäße Vorrichtung eingesetzt werden.

Bevorzugte Materialien für die erfindungsgemäße Beschichtung sind kalthärtende Epoxidharze, die mit einem Aminhärter zusammen verarbeitet werden. Die erfindungsgemäße Vorrichtung ist für den Transport und das Spritzen derartiger Materialien geeignet.

Diese Harzmassen enthalten übliche Füllstoffe und Farbstoffe, Stellmittel, Stabilisatoren und andere übliche Zusätze, um die von ihnen gewünschten Eigenschaften, insbesondere Verarbeitbarkeit und Haltbarkeit sicherzustellen. Es ist sicherzustellen, daß die Teilchengröße dieser Zusatzstoffe so gewählt ist, daß sie die im Materialfluß befindlichen Filtereinrichtungen ohne weiteres passieren können. In jedem Fall handelt es sich um übliche Kunststoffabmischungen, wie sie auch für andere Zwecke eingesetzt werden können - entscheidend für die erfindungsgemäße Erfindung ist weniger die Art der härtenden Kunststoffmasse als vielmehr ihre Korrosionsbeständigkeit und Elastizität nach der Aushärtung. Außer Epoxidharzen können auch andere kalthärtende Kunststoffabmischungen eingesetzt werden, die diesen Anforderungen genügen. Epoxid-Amin-Systeme sind jedoch für die Beschichtung von Kondensatorrohren seit langem bevorzugt.

Die Beschichtung in den Kühlmittelrohren sollte, wenn sie nicht durchgängig und mehrere Schichten umfaßtist, Schicht für Schicht auslaufen, so daß sich ein allmähliches Abflachen der Beschichtung ergibt. Dabei ist es zweckmäßig, mit der jeweils äußeren Schicht weiterhin das Kühlmittelrohr hinein und auf das blanke Metall zu gehen, so daß die darunter liegende Schicht von der darüberliegenden vollständig abgedeckt wird. Die jeweils äußere Schicht kann aber auch weiter außen ansetzen als die darunter liegende. Da es die erfindungsgemäße Vorrichtung erlaubt, die Spritzdüse über beliebig vorgegebene Länge in die Kondensatorrohre einzufahren, ist sie für diese Beschichtungsvariante besonders geeignet.

## Patentansprüche

1. Vorrichtung zur Innenbeschichtung von Rohren, insbesondere von Kühlmittelrohren von Dampfkondensatoren und Wärmetauschern mit Kunststoffen, mit einer Versorgungseinheit (V) zur Heranführung und Weiterleitung von Beschichtungsmaterial, einer Applikationseinheit (A) zur Aufbringung des von der Versorgungseinheit herangeführten Beschichtungsmaterials sowie einer Steuereinheit zur Überwachung und Steuerung der Versorgung mit Beschichtungsmaterial und der Ausbringung des Beschichtungsmaterials auf Rohrinnenwandungen, wobei die Applikationseinheit (A) einen Führungsschlauch (21) mit einem auf das zu beschichtende Rohr aufsetzbaren Mundstück (29) und einem in dem Führungsschlauch (21) geführten und durch das Mundstück (29) in das zu beschichtende Rohr einführbaren Applikationsschlauch (18) mit einer Applikationsdüse (30) aufweist.

2. Vorrichtung nach Anspruch 1, **dadurch gekennzeichnet, daß** der Applikationsschlauch (18) durch den Führungsschlauch (21) über die gesamte Länge des zu beschichtenden Rohrs gesteuert aus- und rückfahrbar ist.

3. Vorrichtung nach Anspruch 1 oder 2, **dadurch gekennzeichnet, daß** der Applikationsschlauch (18) ein Hochdruck-Airless-Spritzschlauch ist, der eine Airless-Spritzdüse (30) aufweist, die für die Applikation im Rückfahrbetrieb ausgelegt ist.

4. Vorrichtung nach einem der vorstehenden Ansprüche, **dadurch gekennzeichnet, daß** der Führungsschlauch (21) in einer Handpistole (27) mit aufgesetztem Mundstück (29) endet, wobei die Handpistole (27) über ein Drehgelenk (26) mit dem Führungsschlauch (21) verbunden ist und der Applikationsschlauch (18) durch die Handpistole (27) und das Mundstück (29) hindurchgeführt ist.

5. Vorrichtung nach Anspruch 4, **dadurch gekennzeichnet, daß** das Mundstück (29) als Distanzhalter ausgelegt ist und eine im wesentlichen ovale Form zum Aufsatz auf das Ende des zu beschichtenden Rohrs aufweist.

6. Vorrichtung nach einem der vorstehenden Ansprüche, **gekennzeichnet durch** ein Filterelement und ein Rückschlagventil im Applikationsschlauch (18) im Bereich der Spritzdüse (30).

7. Vorrichtung nach Anspruch 4 oder 5, **gekennzeichnet durch** eine Handpistole (27), die eine Funktionshandsteuerung (28) aufweist.

8. Vorrichtung nach einem der vorstehenden Ansprüche, **dadurch gekennzeichnet, daß** sie für einen Betriebsdruck im Bereich von 5 bis 500, vorzugsweise 10 bis 250 bar ausgelegt ist.

9. Vorrichtung nach einem der vorstehenden Ansprüche, **dadurch gekennzeichnet, daß** die Versorgungseinrichtung einen mit einem Grobfilter versehenen Ansaugschlauch (2) aufweist, der mit einer gegendruckabhängig arbeitenden Förderpumpe (3) verbunden ist.

10. Vorrichtung nach einem der vorstehenden Ansprüche, **gekennzeichnet durch** ein Rückschlagventil (5) und eine Doppelschaltfiltereinrichtung (11a/11b) im Bereich der Materialzuführung (4/14) zur Applikationseinheit (A).

11. Vorrichtung nach einem der vorstehenden Ansprüche, **gekennzeichnet durch** eine motorgetriebene Schlauchtrommel (17) für den Applikationsschlauch (18) im Bereich der Applikationseinheit (A).

12. Vorrichtung nach einem der vorstehenden Ansprüche, **dadurch gekennzeichnet, daß** die Steuereinheit die Ansaug/Abgabemenge des Beschichtungsmittels sowie den Betriebsdruck überwacht und regelt.

13. Vorrichtung nach Anspruch 12, **dadurch gekennzeichnet, daß** die Steuereinheit hinsichtlich Vorschublänge, Vorschubgeschwindigkeit und/oder Rückfahrgeschwindigkeit des Applikationsschlauches (18) programmierbar ist.

14. Vorrichtung nach Anspruch 13, **dadurch gekennzeichnet, daß** die Steuereinheit hinsichtlich Spritzgeschwindigkeit und Beschichtungsmittelmenge programmierbar ist.

15. Vorrichtung nach einem der vorstehenden Ansprüche, **dadurch gekennzeichnet, daß** sie fahrbar ausgelegt ist.

16. Vorrichtung nach Anspruch 15, **dadurch gekennzeichnet, daß** die Steuer- und Versorgungseinheit (V) einerseits und die Applikationseinheit (A) andererseits auf getrennten Fahrwagen (15) angeordnet sind, die über einen Materialversorgungsschlauch (14) miteinander verbunden sind.

## Claims

1. Apparatus for coating the inside of pipes, in particular the coolant pipes of steam condensers and heat exchangers with plastics, having a supply unit (V) for bringing up and passing on coating material, an application unit (A) for applying the coating material brought up by the supply unit, and a control unit for monitoring and controlling the supply of coating material and the discharge of coating material on the inside walls of pipes, the application unit (A) having a guide tube (21) with a mouth piece (29) to be mounted on the pipe to be coated and an application tube (18) with an application nozzle (30), said application tube being guided within the guide tube (21) and adapted to be introduced into the pipe to be coated through the mouth piece (29).

2. Apparatus according to claim 1, **characterized in that** the application tube (18) is adapted to be run out and back in controlled fashion through the guide tube (21) over the entire length of the pipe to be coated.

3. Apparatus according to claim 1 or 2, **characterized in that** the application tube (18) is a high-pressure airless spray tube having an airless spray nozzle (30) designed for application in run-back operation.

4. Apparatus according to any of the above claims, **characterized in that** the guide tube (21) ends in a hand gun (27) with the mounted mouth piece (29), the hand gun (27) being connected via a swivel joint (26) with the guide tube (21) and the application tube (18) being guided through the hand gun (27) and the mouth piece (29).

5. Apparatus according to claim 4, **characterized in that** the mouth piece (29) is designed as a distance piece and has a substantially oval shape to be mounted on the end of the pipe to be coated.

6. Apparatus according to any of the above claims, **characterized by** a filter element and a check valve in the application tube (18) in the area of the spray nozzle (30).

7. Apparatus according to claim 4 or 5, **characterized by** a hand gun (27) which has a functional manual control (28).

8. Apparatus according to any of the above claims, **characterized in that** it is designed for an operating pressure in the range of 5 to 500 bars, preferably 10 to 250 bars.

9. Apparatus according to any of the above claims, **characterized in that** the supply device has a suction tube (2) provided with a coarse filter and connected with a feed pump (3) working in counterpressure-dependent mode.

10. Apparatus according to any of the above claims, **characterized by** a check valve (5) and a double-connected filter device (11a/11b) in the area of the material feed (4/14) to the application unit (A).

11. Apparatus according to any of the above claims, **characterized by** a motor-driven tube drum (17) for the application tube (18) in the area of the application unit (A).

12. Apparatus according to any of the above claims, **characterized in that** the control unit monitors and regulates the sucked/discharged quantity of coating material and the operating pressure.

13. Apparatus according to claim 12, **characterized in that** the control unit is programmable with regard to feed length, feed rate and/or run-back rate of the application tube (18).

14. Apparatus according to claim 13, **characterized in that** the control unit is programmable with regard to spray rate and quantity of coating material.

15. Apparatus according to any of the above claims, **characterized in that** it is of mobile design.

16. Apparatus according to claim 15, **characterized in that** the control and supply unit (V), on the one hand, and the application unit (A), on the other hand, are disposed on separate dollies (15) interconnected by a material supply tube (14).

## Revendications

1. Dispositif pour le revêtement intérieur de tubes, en particulier de tubes d'agent réfrigérant de condenseurs à vapeur et d'échangeurs de chaleur avec des matières plastiques, ayant une unité d'alimentation (V) pour l'introduction et l'acheminement de matière de revêtement, une unité d'application (A) pour l'enduction de la matière de revêtement introduite par l'unité d'alimentation, ainsi qu'une unité de pilotage pour la surveillance et la commande de l'alimentation en matière de revêtement et l'enduction de la matière de revêtement sur des parois intérieures de tubes, tandis que l'unité d'application (A) présente un tuyau de guidage (21) ayant un embout (29) adaptable sur le tube à revêtir et un tuyau d'application (18) muni d'une buse d'application (30), conduit dans le tuyau de guidage (21) et apte à être introduit à travers l'embout (29) dans le tube à revêtir.

2. Dispositif selon la revendication 1, **caractérisé en ce que** le tuyau d'application (18) peut être manoeuvré de façon à être sorti et reculé au moyen du tuyau d'introduction (21) sur la longueur du tube à revêtir.

3. Dispositif selon la revendication 1 ou 2, **caractérisé en ce que** le tuyau d'application (18) est un tuyau pour pulvérisation sans air, haute pression, qui présente une buse de pulvérisation sans air (30), qui est sortie dans l'opération de recul pour l'application.

4. Dispositif selon l'une des revendications précédentes, **caractérisé en ce que** le tuyau d'introduction (21) se termine par un pistolet à main (27) avec embout rapporté (29), tandis que le pistolet à main (27) est relié par une articulation tournante (26) au tuyau d'introduction (21) et que le tuyau d'application (18) passe à travers le pistolet à main (27) et l'embout (29).

5. Dispositif selon la revendication 4, **caractérisé en ce que** l'embout (29) est configuré comme élément d'écartement et présente une forme essentiellement ovale à la partie disposée à l'extrémité du tube à revêtir.

6. Dispositif selon l'une des revendications précédentes, **caractérisé par** un élément filtrant et un clapet antiretour dans le tuyau d'application (18) dans la zone de la buse de pulvérisation (30).

7. Dispositif selon la revendication 4 ou 5, **caractérisé par** un pistolet à main (27), qui présente une commande manuelle (28) des fonctions.

8. Dispositif selon l'une des revendications précédentes, **caractérisé en ce qu'**il est conçu pour une pression de fonctionnement dans l'intervalle de 5 à 500, de préférence de 10 à 250 bar.

9. Dispositif selon l'une des revendications précédentes, **caractérisé en ce que** l'installation d'approvisionnement présente un tube flexible d'aspiration (2) muni d'un filtre grossier et qui est relié à une pompe à circulation (3) opérant en fonction de la contre-pression.

10. Dispositif selon l'une des revendications précédentes, **caractérisé par** un clapet antiretour (5) et une installation filtrante à double commutation (11a/11b) dans la zone de l'arrivée de matière (4/14) pour l'unité d'application (A).

11. Dispositif selon l'une des revendications précédentes, **caractérisé par** un tambour à tuyau souple (17) pour le tuyau d'application (18) dans la zone de l'unité d'application (A).

12. Dispositif selon l'une des revendications précédentes, **caractérisé en ce que** l'unité de commande contrôle et règle la quantité d'aspiration/évacuation de l'agent de revêtement, ainsi que la pression de fonctionnement.

13. Dispositif selon la revendication 12, **caractérisé en ce que** l'unité de commande est programmable, en ce qui concerne la longueur d'avancement, la vitesse d'avancement et/ou la vitesse de recul du tuyau d'application (18).

14. Dispositif selon la revendication 13, **caractérisé en ce que** l'unité de commande est programmable en ce qui concerne la vitesse de pulvérisation et la quantité d'agent de revêtement.

15. Dispositif selon l'une des revendications précédentes, **caractérisé en ce qu'**il est agencé pour -être transportable.

16. Dispositif selon la revendication 15, **caractérisé en ce que** l'unité de commande et d'approvisionnement (V) d'une part et l'unité d'application (A) d'autre part sont disposées sur des chariots séparés (15), qui sont reliés entre eux par l'intermédiaire d'un tuyau d'approvisionnement de matière (14).
